# FASCICULE DE BREVET EUROPEEN

(11) **EP 4 107 062 B1**
(45) Date de publication et mention de la délivrance du brevet: **22.07.2026**
(21) Numéro de dépôt: 21708061.3
(22) Date de dépôt: 12.02.2021
(51) Int. Cl.: B64C 11/26, B64C 27/473, B29D 99/00, F01D 5/28, F01D 5/30

(54) **PALE COMPOSITE POUR ROTOR DE TURBOMACHINE**
VERBUNDSCHAUFEL FÜR EINEN TURBINENMOTORROTOR
COMPOSITE BLADE FOR A TURBINE ENGINE ROTOR

(30) Priorité: 18.02.2020 FR 2001593
(43) Date de publication de la demande: 28.12.2022
(73) Titulaire: SAFRAN AIRCRAFT ENGINES, 75015 Paris (FR)
(72) Inventeur: COURTIER, Vivien Mickaël, 77550 MOISSY-CRAMAYEL (FR); BINDER, Anthony, 77550 MOISSY-CRAMAYEL (FR)
(74) Mandataire: Gevers & Orès
(86) Numéro de dépôt international: PCT/FR2021/050258
(87) Numéro de publication internationale: WO 2021/165604

(56) Documents cités:
- EP-A1- 0 610 273
- EP-A2- 2 679 487
- EP-B1- 0 610 273
- EP-B1- 2 679 487
- FR-A1- 2 954 271
- US-A- 3 923 421
- ANONYMOUS: "Kevlar - Wikipédia", 31 March 2019 (2019-03-31), XP055738227, Retrieved from the Internet <URL:https://web.archive.org/web/20190331041012/https://fr.wikipedia.org/wiki/Kevlar> [retrieved on 20201009]

## Description

### Domaine technique de l'invention

L'invention concerne une pale de rotor pour une turbomachine. Elle concerne plus particulièrement les hélices non carénées pour des architectures de turbomachines telles que celles de type Open Rotor (c'est à dire à soufflante non carénée). Parmi les architectures Open Rotor, on trouve les CROR (Counter Rotative Open Rotor avec deux rangées d'hélices contra-rotatives), les USF (Unducted Single Fan ou soufflante unique non carénée) ou les turbopropulseurs.

### Arrière-plan technique

L'état de la technique comprend, notamment, les documents EP-B1-0610273, EP-A2-2679487, US-A-3923421 et FR-A1-2954271. Selon une architecture typique, illustrée sur la figure 1, une turbomachine de type Open Rotor, plus précisément USF, peut comporter une seule hélice 1 en amont d'un redresseur fixe 2 en aval. Le moteur de la turbomachine entrainant l'hélice est à l'intérieur du carénage portant le redresseur 2. Les pales de l'hélice 1 sont généralement à calage variable, c'est-à-dire qu'elles tournent autour d'un axe radial sur le moyeu de l'hélice, et leur attache au moyeu doit être étudiée pour cela.

La conception détaillée d'une telle pale met en jeu plusieurs disciplines dont les objectifs sont généralement antagonistes. Le dimensionnement doit permettre des performances aérodynamiques optimales, c'est-à-dire fournir la poussée en minimisant les pertes pour différentes conditions de vol, tout en garantissant la tenue mécanique de l'aube pour une masse minimale et en limitant la signature acoustique de l'aube.

L'amélioration des performances aérodynamiques sur l'hélice tend vers une augmentation du ratio de flux d'air brassé par rapport au flux traversant le moteur, ce qui se traduit par une augmentation du diamètre externe, et donc de l'envergure des pales.

Sur les architectures Open Rotor et USF, les pales des hélices transmettent donc un couple très important sur le moyeu de l'hélice. Par ailleurs, l'optimisation aérodynamique des pales et les considérations acoustiques conduisent à concevoir des pales fines avec des évolutions de profil et de dévers le long de leur envergure. Par ailleurs, les hélices non carénées sont soumises à des efforts dont l'intensité peut varier fortement suivant les conditions de vol et aussi fluctuer violement dans certaines conditions.

De plus, sur les architectures non carénées, les écoulements aérodynamiques à travers les pales sont fortement impactés par les effets d'installation du moteur sur l'aéronef ainsi que par la direction de l'écoulement général en amont, par exemple une incidence par rapport au vent. Cela a pour conséquence, par exemple :
- des distorsions dues à l'installation du moteur car, sans le carénage, le moteur subit l'influence du sol et du fuselage environnant ce qui provoque une dissymétrie de vitesse dans l'alimentation de l'hélice selon les azimuts moteur. Cela entraine une réponse vibratoire sur les premiers ordres moteurs selon la décomposition spatiale en série de Fourier de la distorsion sur la circonférence ; et
- Une sensibilité accrue au vent de travers ou à l'incidence aéronef, lors des phases de montée ou d'approche de l'aéronef, car sans le carénage, la direction de l'écoulement qui s'écoule à travers les pales n'est pas parallèle à l'axe moteur. Cet angle de dérapage induit une réponse vibratoire sur le premier ordre moteur. Par ailleurs, sur les architectures Open Rotor, USF et turbopropulseur, conformément à l'état de l'art pour les hélices, le démarrage du moteur est effectué à un calage très ouvert. En effet, un calage très ouvert (dit drapeau) permet de consommer la puissance par le couple ce qui assure la sécurité machine en garantissant des régimes hélice (vitesses de rotation) faibles. Plus précisément, selon des considérations simples, la puissance est proportionnelle au produit du régime et du couple ; et ce couple est croissant avec l'incidence (donc au calage selon la référence plan hélice). Les efforts aérodynamiques sont croissants avec la prise d'incidence car cela augmente la déviation de l'écoulement que tend à générer le profil. De plus l'homme du métier en aérodynamique comprend que l'effort résultant sur un profil de pale est quasi perpendiculaire à la direction de l'incidence pour un calage très ouvert. La majeure partie de l'effort résultant est orienté dans le plan hélice, la poussée générée par l'hélice est nulle, le couple est maximal et le régime est minimal.

Par ailleurs, avec un calage très ouvert, l'incidence est tellement grande que les pales subissent un écoulement aérodynamique turbulent complètement décollé qui génère une excitation vibratoire large bande. En particulier sur des pales à large corde et de grande envergure, l'effort de flexion est intense, bien que le régime ne soit pas élevé.

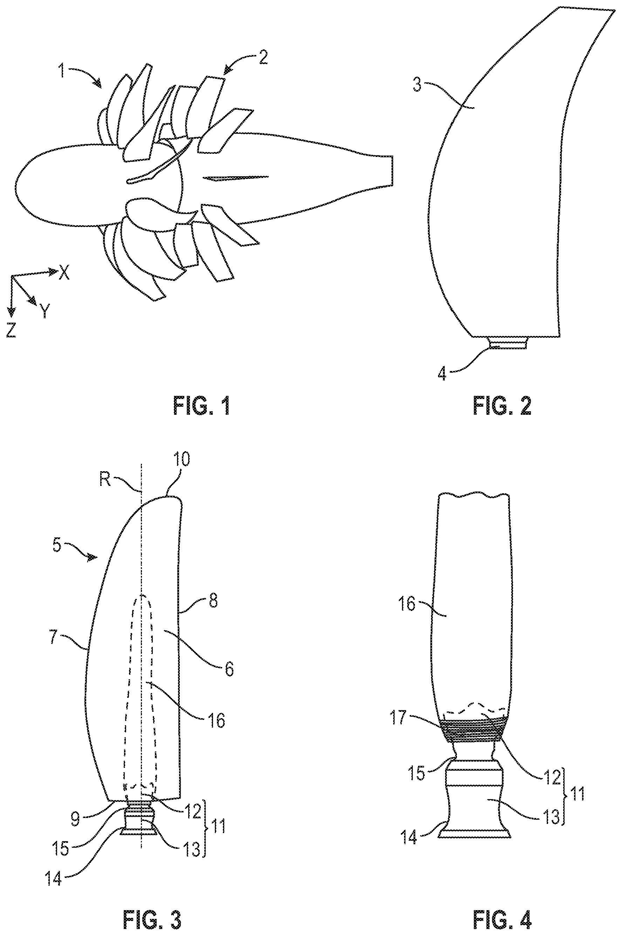

Or, selon l'état de l'art pour les architectures de turbomachines citées précédemment, les pales 3 sont fixées par une attache brochée 4, allongée suivant la corde de la pale au niveau de son pied, comme illustré sur la figure 2. Cette solution permet de reprendre les efforts sur une grande longueur d'attache et de s'adapter à une pale 3 d'hélice en composite fine, adaptée aux turbomachines visées par l'invention.

Cependant, l'attache brochée ne semble pas en l'état une solution viable pour des pales d'hélice à large corde et de grande envergure.

L'objet de l'invention est de proposer une solution pour obtenir une pale composite adaptée aux architectures Open Rotor, USF et turbopropulseur, avec une attache de pied suffisamment rigide pour supporter les sollicitations vibratoires large bande causées par une aérodynamique complètement décollée, ainsi que les vibrations causées par des distorsions dues à l'installation du moteur ou par les efforts dus à l'angle d'incidence de l'écoulement amont.

### Résumé de l'invention

A cet effet, l'invention concerne une pale composite pour rotor de turbomachine, par exemple une hélice non carénée, comprenant une peau en fibres tissées formant le profil externe de la pale et une attache de géométrie cylindrique dans le sens de l'envergure émergeant d'un pied de pale, destinée à maintenir la pale sur un moyeu dudit rotor, caractérisée en ce qu'elle comporte en outre un longeron ayant une structure de tube creux en fibres de carbone tressées, fixé à l'attache et s'étendant à l'intérieur de la peau sur une partie de l'envergure de la pale.

De préférence, le longeron s'étend sur une distance comprise entre 30% et 70% de l'envergure à partir du pied de pale. L'envergure de la pale s'entend ici comme la distance séparant le pied de pale au niveau du bord d'attaque de la pale et la tête de la pale au niveau du bord d'attaque.

Une attache de pied cylindrique peut être dimensionnée pour supporter dans le temps les sollicitations vibratoires large bande causées par une aérodynamique complètement décollée et les vibrations causées par la distorsion (effet d'installation), ainsi que les efforts dus à l'angle d'incidence et de dérapage du vent. Cependant, pour que l'ensemble soit suffisamment rigide, l'installation d'une telle attache selon l'état de l'art entraîne une architecture de pale avec des profils épais sur toute l'envergure de la pale. Le longeron en fibres tressées fournit une structure rigide liée à l'attache qui reprend les efforts sur une partie de l'envergure de la pale pour apporter la rigidité suffisante à l'ensemble. De plus, la structure en fibres tressées du longeron est malléable au moment de la fabrication, ce qui fait qu'elle peut être aplatie lorsqu'on s'éloigne du pied pour pouvoir faire une pale d'hélice avec des profils fins sur la majorité de l'envergure, compatible avec la conception d'une hélice pour turbomachine de type Open Rotor, par exemple.

Avantageusement, l'attache comporte une partie en forme de tulipe insérée à une extrémité du longeron. De préférence, un bobinage en fibre de verre entoure ladite extrémité du longeron de manière à immobiliser cette dernière autour de la partie en forme de tulipe. L'insertion de la tulipe dans le tube creux du longeron permet de reprendre les efforts latéraux sur une distance suffisante. Par ailleurs, la forme en tulipe et le bobinage en fibre de verre assure une retenue du longeron vis-à-vis des forces centrifuges. Sous effort centrifuge, les fibres de verre fonctionnement en traction de par la forme évasée de la tulipe. Bien que le longeron soit inséré de préférence en force autour de la partie en forme de tulipe, le bobinage en fibre de verre sécurise la liaison entre le longeron et l'attache.

De préférence, l'attache est en matériau métallique, encore plus préférentiellement en acier martensitique.

Ce type de matériau permet de réaliser une attache suffisamment rigide avec un diamètre pas trop grand pour limiter l'épaisseur en pied de pale. De plus, ce matériau permet de réaliser les éléments de liaison mécaniques avec un système de mise en rotation sur le moyeu pour modifier le calage de la pale, en vue de son intégration sur une hélice à pas variable.

Ainsi, l'attache comporte avantageusement au moins un renforcement destiné à former une bague pour un roulement à bille permettant de faire pivoter la pale autour d'un axe parallèle à son envergure par rapport au moyeu.

De préférence, une forme en mousse assure l'interface entre le longeron et la peau.

Cette forme en mousse permet la mise en forme de la pale et assure le maintien de la peau vis-à-vis de l'arrachage par force centrifuge

De préférence, l'intérieur du longeron est comblé par une forme en mousse.

La forme en mousse permet d'adapter la forme du longeron creux à la forme générale de la pale, autant pour ce qui est du dévers que de l'épaisseur, la forme en mousse pouvant être effilée et le longeron pouvant être aplati autour de cette forme lors de la fabrication, pour garantir la finesse du profil de la pale.

La pale comporte à sa tête une partie monolithique de peau tissée, sans longeron ni mousse inséré.

Cela permet d'obtenir extrémités de pale très effilées, le longeron ayant rempli sa fonction structurale sur la partie de la pale plus proche du pied.

L'invention concerne aussi une hélice de turbomachine comportant des pales correspondant à la description précédente.

L'invention concerne également un procédé de réalisation d'une pale telle que décrite précédemment, comprenant le tissage d'une préforme pour la peau, caractérisé en ce qu'il comprend une étape de réalisation d'un ensemble comportant une préforme tressée de longeron creux et une attache cylindrique fixées ensemble, une étape d'insertion dudit ensemble dans la préforme de peau et une étape de formation de la pale avec sa forme finale par un procédé de moulage par transfert de résine, dit RTM.

C'est donc la réalisation de l'ensemble longeron et attache qui permet de donner à la pale sa rigidité tout en encaissant les vibrations en pied de pale. Le procédé de moulage par transfert de résine, avec sa phase de polymérisation permet de solidariser les différents éléments de la pale.

Avantageusement, le tissage de la préforme de la peau se fait avec un procédé d'entrelacement de torons de chaîne par des torons de trame avec la création d'une déliaison sur une partie de la peau, agencée pour insérer l'ensemble comprenant la préforme tressée de longeron et l'attache.

La déliaison se fait de préférence sur le bord de fuite, ce qui ne fragilise pas la structure de la pale finale tout en permettant de bien contrôler l'insertion du longeron, à l'intérieur d'une éventuelle forme en mousse qui épouse les contours intérieurs de la peau tissée.

De préférence, une forme en mousse est insérée dans la préforme tressée du longeron, lors de son assemblage avec l'attache, afin de lui faire épouser la forme finale du profil de la pale.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une turbomachine de type Open Rotor concernée par l'invention ;
[Fig.2] la figure 2 est une vue schématique de côté d'une pale selon l'état de l'art pour l'hélice de la turbomachine de la figure 1 ;
[Fig.3] la figure 3 est une vue schématique de côté d'une pale selon l'invention pour l'hélice de la turbomachine de la figure 1 ;
[Fig.4] la figure 4 est une vue schématique de côté du longeron inséré dans la pale de la figure 3 avec sa fixation au pied de la pale ;
[Fig.5A-5B] la figure 5a est une vue schématique en coupe transversale de la pale de la figure 3 près du pied (coupe suivant la ligne A sur la figure 6) ; la figure 5b est une vue schématique en coupe transversale de la pale de la figure 3 dans le corps de la pale en s'éloignant du pied (coupe suivant la ligne B sur la figure 6) ;
[Fig.6] la figure 6 est une vue schématique de côté de la pale de la figure 3 montrant sa structure interne ; et
[Fig.7] la figure 7 est une vue schématique de principe dans le sens longitudinal de la constitution d'une préforme de la peau de la pale de la figure 3 lors de l'étape de tissage de cette préforme.

### Description détaillée de l'invention

En référence à la figure 3, une pale 5 d'hélice en composite selon l'invention comporte une peau 6 tissée, ici en fibres de carbone, qui forme la surface aérodynamique de la pale 5, en contact avec l'air brassé par l'hélice. La peau 6 forme une face intrados et une face extrados de la pale 5 se reliant au bord d'attaque 7 et au bord de fuite 8. Le tissage de la peau 8 comporte des torons de chaîne, orientés longitudinalement du pied 9 vers la tête 10, et des torons de trame, orientés transversalement suivant la corde de la pale 5. Un bon cheminement des torons de trame est assuré par un procédé d'entrelacement dit « interlockage », notamment au niveau du bord d'attaque 7 pour assurer une bonne liaison entre les parties extrados et intrados de la peau 8 à ce niveau. D'autres caractéristiques du tissage de la peau 6 sont précisées plus loin, lors de la description du procédé de fabrication de la pale 5.

Le profil de la pale 5 est relativement épais au niveau du pied 9 et devient de plus en plus fin le long de l'envergure en allant vers la tête 10 de pale. La pale 5 de l'exemple présente une flèche pratiquement nulle mais d'autres exemples peuvent présenter des flèches positives ou négatives. Par ailleurs, la pale 5 est présentée ici en projection suivant un plan radial mais elle peut présenter un dévers et une torsion autour de l'axe radial, qui ne sont pas représentées sur la figure.

Selon l'invention, une attache 11, aussi appelée également pied, de forme cylindrique autour d'un axe radial R est insérée en partie entre les faces extrados et intrados de la peau 6 tissée, au pied 9 de la pale 5. La partie 12 de l'attache 11 insérée entre les deux faces de la peau 6 a une forme en tulipe, s'évasant en allant dans la direction de la tête 10 de la pale 5. Une deuxième partie 13, à l'extérieur du profil de pale défini par la peau 6 tissée, est conformée pour monter la pale 5 dans un moyeu d'hélice et permettre de faire tourner la pale autour de l'axe radial R, afin de faire varier le calage du pas. Ici, la deuxième partie 13 de l'attache 11 est conçue pour être montée sur un dispositif avec deux lignes de roulement et pour jouer le rôle de bague intérieure. Schématiquement, un renfoncement 14 en bas de l'attache 11 est destiné à la bague intérieure d'une première rangée de billes (gros roulement qui encaisse les efforts centrifuges) et un renfoncement 15 près de la partie 12 en tulipe est destiné à la bague intérieure d'une deuxième rangée de billes (petit roulement qui encaisse les efforts aérodynamiques).

On peut imaginer inverser ce dispositif en positionnant le roulement reprenant l'effort radial au-dessus et un roulement de prise des efforts secondaires en dessous. Ce choix peut être proposé pour des contraintes d'intégration.

L'attache 11 est réalisée en matériau métallique, de préférence en acier martensitique, pour reprendre les efforts entre la pale 5 et le moyeu de l'hélice.

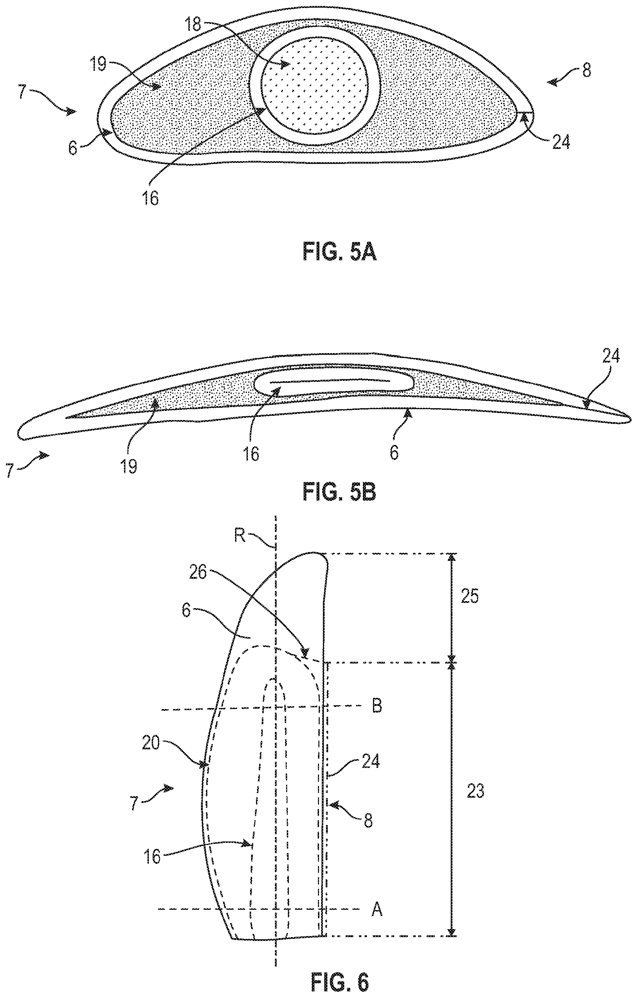

Toujours selon l'invention, un longeron 16 fixé à la partie tulipe 12 de l'attache 11 s'étend sur une grande partie de l'envergure de la pale 5 entre les faces intrados et extrados de la peau 6. Sur l'exemple présenté, il s'étend jusqu'à environ les deux tiers de l'envergure. Suivant les choix de conception, la longueur du longeron 16 sera préférentiellement entre 30% et 70% de l'envergure de la pale 5, 0% correspondant au rayon du pied de pale au niveau du bord d'attaque 9 de la pale et 100% correspondant au rayon de tête 10 au niveau du bord d'attaque. Ce longeron 16 est un tube creux en fibre de carbone tressée. Comme indiqué sur les figures 5A et 5B, il a une section quasiment circulaire au niveau du pied 9 de la pale 5, où l'épaisseur du profil le permet, et sa section s'aplatit progressivement pour arriver dans les zones où le profil de la pale 5 est mince, dans le corps de la pale 5.

En référence à la figure 4, le longeron 16 est inséré autour de la partie tulipe 12 de l'attache 11 et il est ici cerclé autour de cette dernière par un bobinage 17 en fibre de verre. Ce cerclage permet de retenir l'aubage vis-à-vis de la force centrifuge. La fibre de verre est ici un exemple, le bobinage doit être réalisé avec une fibre que l'homme du métier choisira en fonction des contraintes mécaniques présentes.

Par ailleurs, en référence à la figure 5A, une forme en mousse 18 remplit ici l'intérieur du longeron 16. De même une mousse 19 remplit ici l'espace entre le longeron et la peau de la pale. Sur la figure 6, ce volume libre rempli de mousse 19 est représenté dans ses limites suivant les directions longitudinale et transversale par la ligne 20 en traits pointillés.

L'ensemble est injecté de résine et polymérisé pour obtenir sa tenue mécanique par un procédé connu de moulage par transfert de résine, dit RTM pour « Resin Transfert Molding ». D'autres caractéristiques de la pale 5 sont précisées lors de la description ci-après du procédé de fabrication de la pale, qui utilise le procédé RTM.

Dans une étape préalable au procédé lui-même, l'attache 11 en matériau métallique, avec sa partie tulipe 12, peut être usinée par des procédés classiques.

Le procédé comprend ensuite deux étapes qui peuvent être effectuées en parallèle.

La première de ces deux étapes concerne l'assemblage de la préforme du longeron 16 avec l'attache 11.

Elle comprend le tressage de la préforme pour le longeron 16, qui est réalisé avec des fibres de carbone sur une tresseuse industrielle. La préforme est un tube creux et ouvert aux deux extrémités. La section du tube peut être circulaire avec un diamètre variable, notamment pour adapter ensuite la section du longeron 16 aux variations d'épaisseur du profil de la pale 5 le long de l'envergure.

La préforme du longeron 16 est alors assemblé avec la partie tulipe 12 de l'attache. L'assemblage de la préforme tressée avec la partie tulipe 12 est fait en insérant la partie tulipe 12 dans la préforme du longeron 16 puis en réalisant un bobinage 17 de fibre de verre qui a été décrit précédemment. On effectue ces opérations de préférence autour d'une partie tulipe 12 très froide en insérant en force la partie tulipe 12 dans la préforme du longeron 16.

Ensuite, on peut insérer une pièce en mousse 18 préalablement usinée dans la préforme du longeron 16. Cette pièce d'adaptation en mousse 18 a pour fonction de remplir la cavité laissée vide à l'intérieur de la préforme tressée du longeron et de garantir la forme finale du longeron 16 lors de la mise en forme de la pale 5. On notera que la forme en mousse 18 peut être non cylindrique. Dans ce cas, la préforme du longeron 16 pourra être écrasée dans les parties de l'aube où le profil est fin, comme cela a été décrit précédemment. La pièce en mousse 18 peut s'arrêter avant l'extrémité libre de la préforme du longeron 16.

A la fin de cette étape, on obtient un ensemble solidaire comprenant l'attache 11 et la préforme du longeron 16, intégrant la forme en mousse 18 que le longeron entourera dans la pale.

La deuxième des premières étapes comprend le tissage de la préforme tissée pour la peau 6.

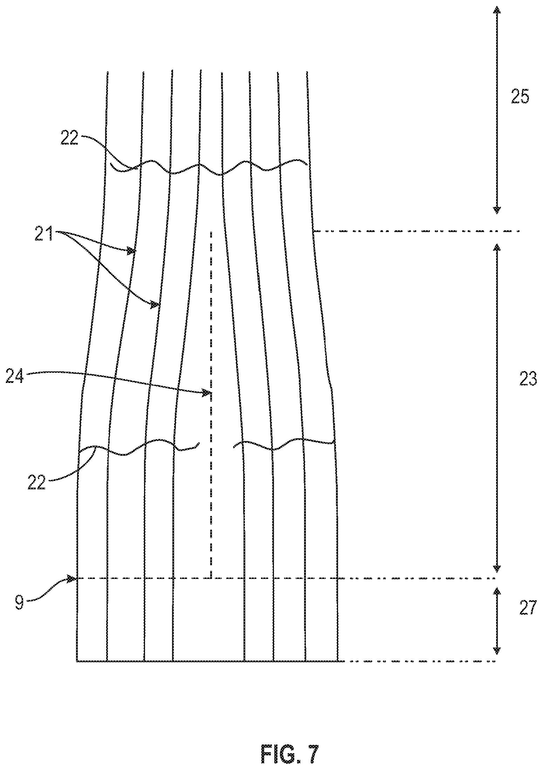

En référence à la figure 7, comme indiqué précédemment, il s'agit essentiellement d'un tissage classique avec des torons de chaîne 21 dans le sens de l'envergure et des torons de trame 22 faisant le tour du profil dans un sens sensiblement perpendiculaire. Le tissage de la préforme est réalisé avec des fibres de carbone sur un métier à tisser industriel. La liaison dans l'épaisseur ou « interlockage » est effectuée en réalisant un cheminement des torons de trame 22 particulier entre les torons de chaîne 21.

En référence à la figure 7, la préforme de la peau 6 est constituée d'une partie inférieure 23, partant du pied 9, au niveau de laquelle il y a une déliaison 24 et d'une partie supérieure 25, comprenant la tête 10, qui est monolithique. La déliaison 4 est ici une ligne s'étendant longitudinalement, le long de laquelle les torons de trame sont arrêtés, de façon à pouvoir ouvrir la préforme le long de cette ligne pour laisser passer la préforme du longeron 16.

La Figure 6 présente une forme possible de déliaison 24 avec une épaisseur de peau 6 constante dans la partie déliée et une déliaison au bord de fuite 8. Cette déliaison 8, qui est également indiquée sur les coupes des figures 5A et 5B, sert uniquement à ouvrir la préforme de peau 6 pour y insérer le longeron. La forme de la déliaison 24 est choisie de manière à garantir une bonne insertion du longeron. De plus, selon la stratégie en termes d'épaisseur de peau dans la partie déliée, la forme de la déliaison 24 est plus ou moins étendue.

Pour ces raisons, la déliaison est réalisée au niveau du bord de fuite et non, par exemple au bord d'attaque, la préforme tissée étant entrelacée ou interlockée tout le long du bord d'attaque 7. Pour permettre l'insertion du longeron, la déliaison 24 couvre la zone où ce dernier est intégré.

La partie inférieure 23, étant destinée à entourer le longeron a donc une extension en envergure au moins égale à celle du longeron 16. La partie supérieure 25 est monolithique. D'une part il n'y a pas de déliaison sur la peau 6, d'autre part, l'épaisseur de peau 6 permet de ne pas laisser de vide entre les deux faces latérales, cette partie est entièrement faite d'un tissage de fibres de carbone. La ligne 26 en traits discontinus sur la figure 6 montre la limite, vue de côté, de cette partie 25.

En référence à la figure 7, la stratégie de tissage consiste à commencer à tisser la préforme brute de la peau 6 par le pied 9 en intégrant tous les torons de chaines 21 nécessaires au tissage de la pièce dans une sorte de pied factice 27.

Une fois que la préforme est tissée, on réalise la découpe des flottés (trimming) puis une découpe jet d'eau afin de chuter le pied factice 27. On obtient alors une déliaison 24 débouchant en pied 9, prête à accueillir l'assemblage de l'attache 11 et de la préforme de longeron 16.

Comme c'est le cas sur une préforme classique, la préforme brute, une fois le pied factice 27 chuté présente tout de même des sur-longueurs. Il y a des sur-longueurs au niveau de la tête, du bord d'attaque et du bord de fuite. Sur la partie inférieure de la peau 6, la capacité de reprise d'usinage post-injection est limitée en raison de l'assemblage sur le longeron et la tulipe. Il peut toutefois y avoir une faible sur-longueur qui sera reprise sauf à proximité immédiate du pied 9.

Après les deux premières étapes, une troisième étape consiste à effectuer une mise en forme de la pale 5 et l'injection.

L'ensemble attache 11, préforme du longeron 16 et forme en mousse 18 est inséré dans la préforme tissée de la peau 6 au niveau de la déliaison 24. Une structure préalablement usinée en mousse 19 peut être utilisée à l'interface entre la préforme de peau 6 et la préforme de longeron 16. La géométrie de cette pièce d'interface 19 peut être étudiée de façon à garantir la tenue au centrifuge de la peau 6.

L'ensemble est alors injecté et polymérisé à l'aide du procédé RTM pour obtenir le brut de la pale 5.

La dernière étape du procédé de fabrication concerne le détourage et les finitions.

Il faut noter que, durant la polymérisation, des flashs de résine peuvent se produire sur les sur-longueurs. Ils sont éliminés lors de la reprise d'usinage comprenant le détourage du bord d'attaque 7 et du bord de fuite 8, ainsi que la découpe de la tête 10 de pale.

L'étape comprend aussi normalement une reprise d'usinage au niveau de la partie inférieure de la pale (sur la ligne moyeu) qui doit être faite avec précision en raison de l'assemblage avec l'attache 11.

Eventuellement, le procédé est terminé par le collage d'un bord d'attaque et/ou d'un bord de fuite rapporté et d'un film de protection sur la peau.

## Revendications

1. Pale (5) composite pour rotor de turbomachine, par exemple une hélice non carénée, comprenant :
- une peau (6) en fibres tissées formant le profil externe de la pale, et
- une attache (11) de géométrie cylindrique dans le sens de l'envergure émergeant d'un pied (9) de pale, l'attache (11) destinée à maintenir la pale (5) sur un moyeu dudit rotor,
la pale (5) composite s'étendant radialement entre une tête (10) et le pied (9), où la pale comporte en outre un longeron (16) ayant une structure de tube creux en fibres de carbone tressées, fixé à l'attache (11) et s'étendant à l'intérieur de la peau (6) sur une partie de l'envergure de la pale (5), préférentiellement sur une distance comprise entre 30% et 70% de l'envergure à partir du pied (9) de pale,
**caractérisée en ce que**
la pale (5) composite comporte à sa tête (10) uniquement une partie monolithique (25) de peau (6) tissée.

2. Pale (5) selon la revendication 1, **caractérisée en ce que** l'attache (11) comporte une partie (12) en forme de tulipe insérée à une extrémité du longeron (16), un bobinage (17) en fibre de verre entourant de préférence ladite extrémité du longeron (16) de manière à immobiliser cette dernière autour de la partie (12) en forme de tulipe.

3. Pale (5) selon la revendication 1 ou 2, **caractérisée en ce que** l'attache (11) est en matériau métallique.

4. Pale (5) selon la revendication 3, caractérisée en ce l'attache (11) est en acier martensitique.

5. Pale (5) selon l'une des revendications 1 à 4, **caractérisée en ce qu'**une forme en mousse (19) assure l'interface entre le longeron (16) et la peau (6).

6. Pale (5) selon l'une des revendications 1 à 5, **caractérisée en ce que** l'intérieur du longeron est comblé par une forme en mousse (18).

7. Pale selon l'une des revendications 1 à 6, **caractérisée en ce que** l'attache (11) comporte au moins un renforcement (14, 15) destiné à former une bague pour un roulement à bille.

8. Pale (5) selon la revendication 1, **caractérisée en ce que** le longeron (16) est fixé à une partie tulipe (12) de l'attache (11) et s'étend sur une grande partie de l'envergure de la pale (5) entre des faces intrados et extrados de la peau (6),
la pale (5) comprend une section quasiment circulaire au niveau d'un pied (9) de la pale (5), où l'épaisseur du profil le permet, et sa section s'aplatit progressivement pour arriver dans les zones où le profil de la pale (5) est mince, dans le corps de la pale (5), et
la pale (5) comprend une forme en mousse (18) qui remplit l'intérieur du longeron (16), et une mousse (19) qui remplit l'espace entre le longeron (16) et la peau (6) de la pale.

9. Pale (5) selon la revendication 8, **caractérisée en ce que** la pale (5) comprend une déliaison (24) au niveau d'un bord de fuite (8) de la peau (6) qui sert uniquement à ouvrir une préforme de peau (6) pour y insérer le longeron (16).

10. Hélice de turbomachine comportant des pales (5) selon l'une des revendications précédentes.

11. Procédé de réalisation d'une pale (5) selon l'une des revendications 1 à 9, comprenant le tissage d'une préforme pour la peau (6), **caractérisé en ce qu'**il comprend une étape de réalisation d'un ensemble comportant une préforme tressée de longeron (16) creux et une attache (11) cylindrique fixées ensemble, une étape d'insertion dudit ensemble dans la préforme de peau (6) et une étape de formation de la pale (5) avec sa forme finale par un procédé de moulage par transfert de résine, dit RTM.

12. Procédé selon la revendication précédente, dans lequel le tissage de la préforme de la peau (6) se fait avec un procédé d'entrelacement de torons de chaîne (21) par des torons de trame (22) avec la création d'une déliaison (24) sur une partie (23) de la peau, agencée pour insérer l'ensemble comprenant la préforme tressée de longeron (16) et l'attache (11).

13. Procédé selon la revendication précédente, **caractérisé en ce que** ladite déliaison (24) se fait sur un bord de fuite (8) de la préforme de peau (6).

14. Procédé selon l'une des 11 à 13, dans lequel une forme en mousse (18) est insérée dans la préforme tressée du longeron (16), lors de son assemblage avec l'attache (11), afin de lui faire épouser la forme finale du profil de la pale (5).

## Patentansprüche

1. Verbundblatt (5) für einen Turbomaschinenrotor, zum Beispiel einen mantellosen Propeller, umfassend:
- eine Hülle (6) aus gewebten Fasern, die das Außenprofil des Blattes bildet, und
- eine Befestigung (11) von in Spannweitenrichtung zylindrischer Geometrie, die aus einem Blattfuß (9) herausragt, wobei die Befestigung (11) dazu bestimmt ist, das Blatt (5) an einer Nabe des Rotors zu halten,
wobei sich das Verbundblatt (5) radial zwischen einem Kopf (10) und dem Fuß (9) erstreckt, wobei das Blatt weiter einen Längsträger (16) mit einer Hohlrohrstruktur aus geflochtenen Kohlenstofffasern umfasst, der an der Befestigung (11) befestigt ist und sich im Inneren der Hülle (6) über einen Teil der Spannweite des Blattes (5), vorzugsweise über eine Strecke im Bereich zwischen 30 % und 70 % der Spannweite ab dem Blattfuß (9), erstreckt,
**dadurch gekennzeichnet, dass** das Verbundblatt (5) an seinem Kopf (10) nur einen monolithischen Teil (25) gewebter Hülle (6) umfasst.

2. Blatt (5) nach Anspruch 1, **dadurch gekennzeichnet, dass** die Befestigung (11) einen tulpenförmigen Teil (12) umfasst, der an einem Ende des Längsträgers (16) eingesetzt ist, wobei eine Glasfaserumwicklung (17) vorzugsweise das Ende des Längsträgers (16) umgibt, um dieses um den tulpenförmigen Teil (12) herum zu fixieren.

3. Blatt (5) nach Anspruch 1 oder 2, **dadurch gekennzeichnet, dass** die Befestigung (11) aus metallischen Material ist.

4. Blatt (5) nach Anspruch 3, **dadurch gekennzeichnet, dass** die Befestigung (11) aus martensitischem Stahl ist.

5. Blatt (5) nach einem der Ansprüche 1 bis 4, **dadurch gekennzeichnet, dass** eine Schaumstoffform (19) die Grenzfläche zwischen dem Längsträger (16) und der Hülle (6) gewährleistet.

6. Blatt (5) nach einem der Ansprüche 1 bis 5, **dadurch gekennzeichnet, dass** das Innere des Längsträgers mit einer Schaumstoffform (18) gefüllt ist.

7. Blatt nach einem der Ansprüche 1 bis 6, **dadurch gekennzeichnet, dass** die Befestigung (11) mindestens eine Verstärkung (14, 15) umfasst, die dazu bestimmt ist, einen Ring für ein Kugellager zu bilden.

8. Blatt (5) nach Anspruch 1, **dadurch gekennzeichnet, dass** der Längsträger (16) an einem Tulpenteil (12) der Befestigung (11) befestigt ist und sich über einen Großteil der Spannweite des Blattes (5) zwischen einer Innenseite und Außenseite der Hülle (6) erstreckt,
das Blatt (5) an einem Fuß (9) des Blattes (5) dort, wo die Dicke des Profils es zulässt, einen nahezu kreisförmigen Querschnitt umfasst, und sein Querschnitt allmählich abflacht, um in den Gebieten anzugelangen, in denen das Profil des Blattes (5) dünn ist, im Körper des Blattes (5), und
das Blatt (5) eine Schaumstoffform (18), die das Innere des Längsträgers (16) ausfüllt, und einen Schaumstoff (19) umfasst, der den Raum zwischen dem Längsträger (16) und der Hülle (6) des Blattes ausfüllt.

9. Blatt (5) nach Anspruch 8, **dadurch gekennzeichnet, dass** das Blatt (5) an einer Abströmkante (8) der Hülle (6) eine Entbindung (24) umfasst, die nur dazu dient, eine Vorform der Hülle (6) zu öffnen, um den Längsträger (16) dort einzusetzen.

10. Turbomashinenpropeller, der Blätter (5) nach einem der vorstehenden Ansprüche umfasst.

11. Verfahren zur Herstellung eines Blattes (5) nach einem der Ansprüche 1 bis 9, das das Weben einer Vorform für die Hülle (6) umfasst, **dadurch gekennzeichnet, dass** es einen Schritt des Herstellens einer Baugruppe, die eine geflochtene Vorform eines hohlen Längsträgers (16) und eine zylindrische Befestigung (11) umfasst, welche aneinander befestigt sind, einen Schritt des Einsetzens der Baugruppe in die Vorform der Hülle (6) und einen Schritt des Bildens des Blattes (5) mit dessen endgültiger Form durch ein sogenanntes Harztransferformverfahren, RTM, umfasst.

12. Verfahren nach dem vorstehenden Anspruch, wobei das Weben der Vorform der Hülle (6) mit einem Verfahren des Verflechtens von Kettfäden (21) durch Schussfäden (22) mit dem Erzeugen einer über einen Teil (23) der Hülle Entbindung (24) ausgeführt wird, die dafür eingerichtet ist, die Baugruppe, welche die geflochtene Vorform des Längsträgers (16) und die Befestigung (11) umfasst, einzusetzen.

13. Verfahren nach dem vorstehenden Anspruch, **dadurch gekennzeichnet, dass** die Entbindung (24) an einer Abströmkante (8) der Vorform der Hülle (6) ausgeführt wird.

14. Verfahren nach einem der Ansprüche 11 bis 13, wobei bei ihrem Zusammenbau mit der Befestigung (11) eine Schaumstoffform (18) in die geflochtene Vorform des Längsträgers (16) eingesetzt wird, um ihm die endgültige Form des Profils des Blattes (5) zu verleihen.

## Claims

1. A composite blade (5) for a turbine engine rotor, for example an un-ducted propeller, comprising:
- a skin (6) made of woven fibres forming the external profile of the blade, and
- an attachment (11) with cylindrical geometry in the direction of the span emerging from a blade root (9), the attachment (11) is intended to hold the blade (5) on a hub of said rotor,
the composite blade (5) extending radially between a head (10) and the root (9),
wherein the blade further comprises a spar (16) having a hollow tube structure made of braided carbon fibres, fixed to the attachment (11) and extending inside the skin (6) over one portion of the span of the blade (5), preferably over a distance of between 30% and 70% of the span from the blade root (9),
**characterized in that** the composite pale (5) comprises at its head (10) only a monolithic portion of woven skin (6).

2. The blade (5) according to claim 1, **characterised in that** the attachment (11) comprises a bell-shaped portion (12) inserted at one end of the spar (16), a coiling (17) of glass fibre preferably surrounding said end of the spar (16) so as to immobilize the latter around the bell-shaped portion (12).

3. The blade (5) according to claim 1 or 2, **characterised in that** the attachment (11) is made of metallic material.

4. The blade (5) according to claim 3, **characterised in that** the attachment (11) is made of martensitic steel.

5. The blade (5) according to any of claims 1 to 4, **characterised in that** a foam shape (19) ensures the interface between the spar (16) and the skin (6).

6. The blade (5) according to one of claims 1 to 5, **characterised in that** the interior of the spar is filled with a foam shape (18).

7. The blade according to any of claims 1 to 6, **characterised in that** the attachment (11) comprises at least one reinforcement (14, 15) intended to form a ring for a ball rolling.

8. The blade according to claim 1, **characterised in that** the spar (16) is fixed to a bell-shaped portion (12) of the attachment (11) and extends over a large part of the span of the blade (5) between the intrados and extrados faces of the skin (6),
the blade (5) comprises an almost circular cross-section at the level of the root (9) of the blade (5), where the thickness of the profile allows, and its cross-section gradually flattens out to arrive in the areas where the profile of the blade (5) is thin, in the body of the blade (5), and
the blade (5) comprises a foam shape (18) which fills the interior of the spar (16), and a foam (19) which fills the space between the spar (16) and the skin (6) of the blade.

9. The blade according to claim 8, **characterised in that** the blade (5) comprises an unbinding (24) at the level of a trailing edge (8) of the skin (6) which serves only to open a preform of skin (6) to insert the spar (16).

10. A turbine engine propeller comprising blades (5) according to any of the preceding claims.

11. A method for manufacturing a blade (5) according to one of claims 1 to 9, comprising the weaving of a preform for the skin (6), **characterised in that** it comprises a step of manufacturing an assembly comprising a braided preform of hollow spar (18) and a cylindrical attachment (11) fixed together, a step of inserting said assembly into the skin preform (6) and a step of forming the blade (5) with its final shape by a resin transfer moulding method, referred to as RTM.

12. The method according to the preceding claim, wherein the weaving of the preform of the skin (6) is done with a method of interweaving warp strands (21) with weft strands (22) with the creation of an unbinding (24) on a portion (23) of the skin, arranged to insert the assembly comprising the braided spar preform (18) and the attachment (11).

13. The method according to the preceding claim, **characterised in that** said unbinding (24) takes place at a trailing edge (8) of the skin preform (6).

14. The method according to any of claims 11 to 13, wherein a foam shape (18) is inserted into the braided preform of the spar (16), when assembled with the attachment (11), in order to make it conform to the final shape of the profile of the blade (5).
